# EUROPEAN PATENT APPLICATION

(11) **EP 2 361 755 A2**
(43) Date of publication of application: **31.08.2011**
(21) Application number: 10197075.4
(22) Date of filing: 27.12.2010
(51) Int. Cl.: B29D 11/00, G02B 3/00

(54) **Lens array**

(30) Priority: 26.02.2010 JP 2010043135
(71) Applicant: FUJIFILM Corporation, Tokyo (JP)
(72) Inventor: Yamada, Daisuke, Saitama (JP); Harada, Akinori, Saitama (JP)
(74) Representative: Klunker . Schmitt-Nilson . Hirsch

(57) **Abstract**

A lens array includes: a substrate (30) in which a plurality of through holes (34) are formed; and a plurality of lenses (32) provided in the substrate by burying the plurality of through holes. A part of the through hole is different in at least one of sectional shape and opening area of the through hole, which are taken in parallel with a surface of the substrate, from another part of the through hole in a depth direction.

## Description

### BACKGROUND

### 1. Technical Field

The present invention relates to a lens array.

### 2. Related Art

Nowadays, a mobile terminal as an electronic equipment such as a cellular phone, PDA (Personal Digital Assistant), or the like is equipped with a small and thin image pickup unit. In general, such image pickup unit is equipped with a solid state image pickup device such as a CCD (Charge Coupled Device) image sensor, a CMOS (Complementary Metal Oxide Semiconductor) image sensor, or the like, and one lens or more for forming an image of a subject on the solid state image pickup device.

In compliance with a reduction in size and thickness of the mobile terminal, a further reduction in size and thickness is also requested of the image pickup unit. Also, better productivity of the image pickup unit is requested at a time of production. In answer to such request, such a method is proposed that one lens array, in which a plurality of lenses are aligned respectively, or more are stacked on a sensor array in which a plurality of solid state image pickup devices are aligned, and then the image pickup units are mass-produced by cutting the resultant laminated structure in such a way that each image pickup unit contains the solid state image pickup device and the lenses (see Patent Document 1 (JP-A-2008-233884), for example).

As the lens array employed in the above application, in Patent Document 1, it is set forth that the lens is constructed by the substrate and the lens member such that the lens member made of resin material is joined to a surface of the parallel- plate substrate formed of light transmissible material such as glass, or the like. However, in the lens array set forth in Patent Document 1, it is unfeasible to reduce thicknesses of respective portions of the lens smaller than a thickness of the substrate, and thus a reduction in thickness of the lens is inhibited.

As the other lens array, in Patent Document 2 (WO-A-2009/076790), it is set forth that the through holes are formed in the substrate, and the lenses are formed by filling the through holes with the resin material. Also, in the lens array set forth in Patent Document 2, the flange that is provided to overlap with the substrate surface is provided to the lens to stabilize the adhesion of the lens onto the substrate. According to the lens array set forth in Patent Document 2, the lens is provided in the through holes on the substrate respectively, and thus the lens having the part that is thinner than the substrate can be formed. However, the flange extends beyond the outer side of the optical surface on the surface of the substrate, and therefore the lens is apt to become a large-sized one.

### SUMMARY

An illustrative aspect of the invention is to aim at stabilizing adhesion of a lens onto a substrate without an increase in size of the lens.

According to an aspect of the invention, a lens array includes: a substrate in which a plurality of through holes are formed; and a plurality of lenses provided in the substrate by burying the plurality of through holes. A part of the through hole is different in at least one of sectional shape and opening area of the through hole, which are taken in parallel with a surface of the substrate, from another part of the through hole in a depth direction.

According to the aspect of the invention, a sectional shape and/or an opening area of the through hole, which are taken in parallel with a surface of the substrate, are different from other parts at at least a part of the through hole in a depth direction. Hence, a mechanical engagement that prevents a displacement of the lens in at least one direction along the depth direction of the through hole is produced between the inner wall of the through hole and the lens provided by burying the trough hole. Therefore, the adhesion of the lens to the substrate can be stabilized. Also, a contact area between the inner wall of the through hole and the lens provided by burying the through hole is expanded by roughening at least a part of the inner wall of the through hole, and a bonding strength between both members is enhanced. As a result, the adhesion of the lens to the substrate can be stabilized much more. In this manner, the adhesion of the lens to the substrate can be stabilized only by the adhesion between the lens and the inner wall of the through hole, and therefore the flange to be provided to overlap with the surface of the substrate can be omitted.

### BRIEF DESCRIPTION OF THE DRAWINGS

FIG.1 is a view showing an example of an image pickup unit to explain an embodiment of the present invention.
FIG.2 is a view showing an example of a lens array to explain an embodiment of the present invention.
FIG.3 is a view showing the lens array in FIG.2 in section taken along a III-III line.
FIGS.4A to 4D are views showing an example of a method of manufacturing a substrate contained in the lens array in FIG.2.
FIG.5 is a view showing an example of a molding mold used in manufacturing the lens array in FIG.2.
FIGS.6A to 6C are views showing an example of a method of manufacturing the lens array in FIG.2.
FIG 7 is a view showing a variation of the lens array in FIG.2.
FIG.8 is a view showing another example of a lens array to explain the embodiment of the present invention.
FIG.9 is a view showing a variation of the lens array in FIG.8.
FIG 10 is a view showing another variation of the lens array in FIG.8.
FIG.11 is a view showing still another example of a lens array to explain the embodiment of the present invention.
FIG.12 is a view showing a variation of the lens array in FIG.11.
FIGS.13A and 13B are views showing an example of a method of manufacturing an image pickup unit in FIG.1.
FIGS.14A to 14C are views showing a variation of the method of manufacturing the image pickup unit in FIGS.13A and 13B.
FIG.15 is a view showing another example of a method of manufacturing an image pickup unit in FIG.1.
FIG.16 is a view showing a variation of the method of manufacturing the image pickup unit in FIG 15.

### DETAILED DESCRIPTION

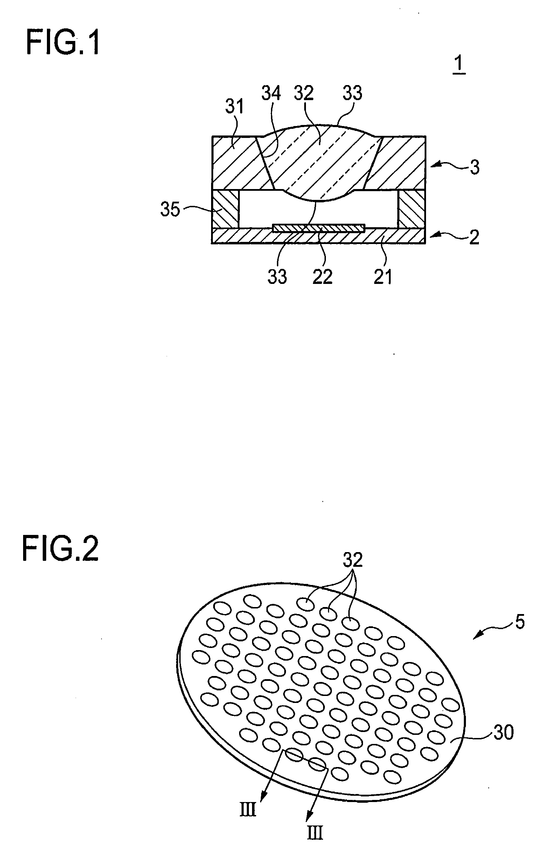

FIG.1 shows an example of an image pickup unit.

An image pickup unit 1 shown in FIG.1 contains a sensor module 2 containing a solid state imaging device 22, and a lens module 3 containing a lens 32.

The sensor module 2 has a wafer piece 21. The wafer piece 21 is formed of a semiconductor such as silicon, for example, and is formed like a substantially rectangular shape, when viewed from the top. The solid state imaging device 22 is provided in the almost center portion of the wafer piece 21. The solid state imaging device 22 is formed of a CCD image sensor, a CMOS image sensor, or the like, for example. The film forming step, the photolithography step, the etching step, the impurity implanting step, etc., which are well known, are applied to the wafer piece 21. Thus, this solid state imaging device 22 is constructed by forming a light receiving area, electrodes, insulating films, wirings, etc. formed on the wafer piece 21.

The lens module 3 has a substrate piece 31 and the lens 32. The substrate piece 31 is formed like a substantially rectangular shape that is almost identical to the wafer piece 21 of the sensor module 2, when viewed from the top. A through hole 34 that passes through the substrate piece 31 in the thickness direction is formed in a center portion of the substrate piece 31. The lens 32 is provided to fill the through hole 34, and is secured to the substrate piece 31. An optical surface 33 is shaped into a convex spherical surface in all illustrated examples, but various combinations consisting of a convex spherical surface, a concave spherical surface, an aspherical surface, or a planar surface may be employed according to the application.

The lens module 3 is laminated on the sensor module 2 with the intervention of a spacer 35 between the substrate piece 31 and the wafer piece 21 of the sensor module 2. The lens 32 forms an image of a subject in a light receiving area of the solid state imaging device 22. Preferably the substrate piece 31 has a light shielding property. Accordingly, such a situation can be blocked that the light that is unnecessary for the image formation passes through the substrate piece 31 and is incident on the solid state imaging device 22. In the illustrated example, the lens module 3 laminated on the sensor module 2 is only one in number, but a plurality of lens modules 3 may be laminated on the sensor module 2.

A shape of the spacer 35 is not particularly limited so long as the lens module 3 can be stabilized on the sensor module 2. Preferably, the spacer 35 should be shaped like a frame that surrounds the solid state imaging device 22. When the spacer 35 is shaped like a frame, a space formed between the sensor module 2 and the lens module 3 can be isolated from the outside. As a result, it can be prevented that a foreign matter such as a dust, or the like enters into the space formed between the sensor module 2 and the lens module 3, and it can be prevented that a foreign matter adheres to the solid state imaging device 22 or the lens 32. In this case, when the light shielding property is provided to the spacer 35, such a situation can also be blocked that the light that is unnecessary for the image formation is incident on the solid state imaging device 22 through an area between the sensor module 2 and the lens module 3.

Typically, the image pickup unit 1 constructed as above is reflow-mounted on a circuit substrate of a mobile terminal. More particularly, a solder paste is printed previously in a position of the circuit substrate where the image pickup unit 1 is to be mounted, and the image pickup unit 1 is put on that position. Then, the heating process such as the irradiation of infrared rays, the blowing of a hot air, or the like is applied to the circuit substrate including this image pickup unit 1. Accordingly, the solder is fused and then goes solid, and thus the image pickup unit 1 is mounted on the circuit substrate.

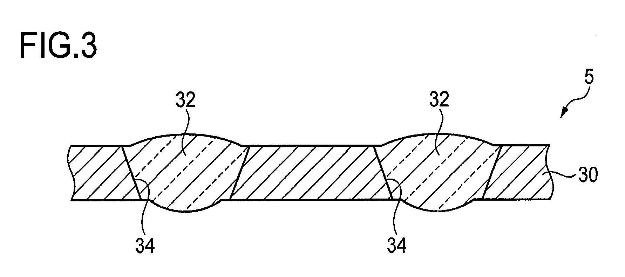

FIG.2 and FIG.3 show an example of a lens array.

A lens array 5 shown in FIG.2 and FIG.3 has a substrate 30 and a plurality of lenses 32. The above lens module 3 is obtained by cutting the substrate 30, and then dividing the lens array 5 to contain the lens 32 individually. In other words, the lens array 5 is an assembly of the above lens modules 3.

The substrate 30 is formed like a wafer (circular plate), and typically a diameter of the substrate 30 is 6 inch, 8 inch, or 12 inch. A plurality of through holes 34 that pass through in the thickness direction respectively are formed in the substrate 30. The through holes 34 are aligned in a matrix fashion, and typically several thousand through holes 34 are aligned on the substrate 30 having the above size. In this case, a profile of the substrate 30 is not limited to the wafer shape and, for example, a rectangular shape may be employed. Also, an alignment of the through holes 34 is not limited to the matrix type. For example, a radial alignment, a coaxial annular alignment, or other two-dimensional alignments may be employed, and also one-dimensional alignment may be employed.

The through hole 34 is shaped such that a sectional shape and/or an opening area, which are taken in parallel with the surface of the substrate 30, are different at at least a part of this hole in the depth direction from those of other parts. In the illustrated example, the through hole 34 is formed into a taper shape whose sectional shape has a circular shape at any location in the depth direction of the through hole 34 and whose diameter is reduced gradually in section from an upper opening to a lower opening in FIG.3 (whose sectional area is reduced gradually).

The lens 32 is provided by burying the through hole 34, and adheres tightly to an inner wall of the through hole 34. An occupying area of the lens 32 on the surface of the lens array 5 is fitted into an area of the through hole 34. That is, a flange that extends beyond the outer side of the optical surface 33 to overlap with the surface of the substrate 30 is not provided to the lens 32. The lens 32 does not protrude from the opening portion of the through hole 34 on the surface of the substrate 30 along the surface of the substrate 30, and does not extend over the surface of the substrate 30.

Since an opening area of the through hole 34 in section is changed along the depth direction, a mechanical engagement that prevents a displacement of the lens 32 in at least one direction along the depth direction of the through hole 34 is produced between the inner wall of the through hole 34 and the lens 32. In the illustrated example, since the lower opening of the through hole 34 in FIG.3 is set smaller, a mechanical engagement that prevents a displacement of the lens 32 acting toward the lower opening in FIG 3, i.e., prevents that the lens 32 comes out of the lower opening of the through hole 34 in FIG.3, is produced between the inner wall of the through hole 34 and the lens 32. Accordingly, the adhesion of the lens 32 onto the substrate 30 is stabilized. In the above example, explanation is made on the assumption that a sectional shape of the through hole 34 has a circular shape at any location of the through hole 34 in the depth direction. In this case, a sectional shape (e.g., square shape) that is different from other parts whose sectional shape has a circular shape may be employed at at least a part of the through hole 34 in the depth direction, for example. According to this structure, a mechanical engagement that prevents a displacement of the lens 32 in at least one direction along the depth direction of the through hole 34 can also be produced between the inner wall of the through hole 34 and the lens 32.

Further, the lens 32 provided by burying the through hole 34 can be formed of a single material as a whole, and such lens is excellent in the optical performances. In other words, the boundary at which the optical characteristics such as a refractive index, and the like are different mutually is not formed on the optical axis of the lens, and the troubles in the optical performances such as the reflection of light at the boundary, the flare or ghost caused due to such reflection, and the like can be prevented.

An example of a method of manufacturing the lens array in FIG.2 will be explained hereunder.

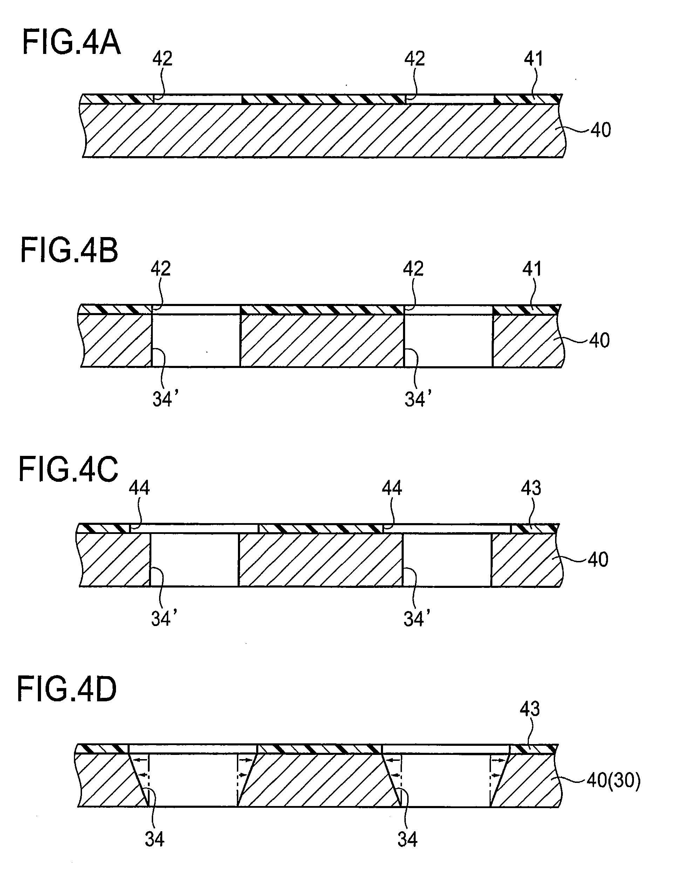

FIGS.4A to 4D show an example of a method of manufacturing a substrate contained in the lens array in FIG.2.

The example in FIGS.4A to 4D shows the case where a plurality of through holes 34 are formed collectively by applying the blasting process to a substrate material 40, and thus the substrate 30 is obtained. The substrate material 40 is formed to have the same outer shape as the substrate 30 and the same thickness. As the material of the substrate material 40 (the substrate 30), glass, silicon, metal such as SUS, or the like, resin such as acrylic, epoxy, PAI (polyamideimide), PES (polyethersulfone), or the like, and others can be employed.

As shown in FIG.4A, a blast mask 41 is provided on one surface of the substrate material 40 (a surface on the upper side in FIG.4A, and referred to as an "upper surface" hereinafter). A plurality of holes 42 are formed in the blast mask 41 in the same alignment as those of a plurality of through holes 34 in the substrate 30. The blast mask 41 exposes a plurality of areas of the upper surface of the substrate material 40. A diameter of the hole 42 is set to the same diameter as the smaller-diameter opening of the taper-shaped through hole 34 or a diameter slightly smaller than this smaller-diameter opening.

As shown in FIG.4B, the blasting process is applied to the supper surface side of the substrate material 40, so that the exposed areas of the substrate material 40 are removed. Accordingly, substantially circular cylindrical holes 34' are formed in the substrate material 40.

As shown in FIG.4C, the blast mask 41 is removed from the upper surface of the substrate material 40, and a blast mask 43 is provided newly on the upper surface of the substrate material 40. A plurality of holes 44 are formed in the blast mask 43 in the same alignment as those of a plurality of through holes 34 in the substrate 30. The blast mask 41 exposes a plurality of areas of the upper surface of the substrate material 40. The exposed area has the same diameter as the larger-diameter opening of the taper-shaped through hole 34.

As shown in FIG.4D, the blasting process is applied to the supper surface side of the substrate material 40. Because the supper surface side of the substrate material 40 is exposed to a larger amount of processing media, a diameter of the hoe 34' is expanded gradually from the upper surface side of the substrate material 40. The blasting process is stopped at an adequate timing before the exposed areas are perfectly removed, and thus taper-shaped through hole 34 is formed.

In the above example, the through holes 34 are formed by applying the blasting process to the substrate material 40, but the through holes 34 can also be formed by the etching process. In this case, when a metal or a resin, which has relatively high toughness, is employed as the material of the substrate material 40 (the substrate 30), the through holes 34 can be formed by the machining process using the punching.

As described above, it is preferable that the substrate piece 31 (see FIG.1) of the lens module 3 should have the light shielding property. Therefore, it is preferable that the substrate 30 as an assembly of the substrate pieces 31 should be formed of the light shielding material. For example, either when the opaque material such as silicon, metal, resin such as PAI, or the like is employed as the material of the substrate 30 or when the transparent material such as glass, resin such as acrylic, epoxy, PES, or the like, which is colored in black, is employed as the material of the substrate 30, the light shielding property can also be provided to the substrate 30. Also, the light shielding property can be provided to the substrate 30 by coating the surface of the substrate 30 with a black paint or plating the surface of the substrate 30 with chromium.

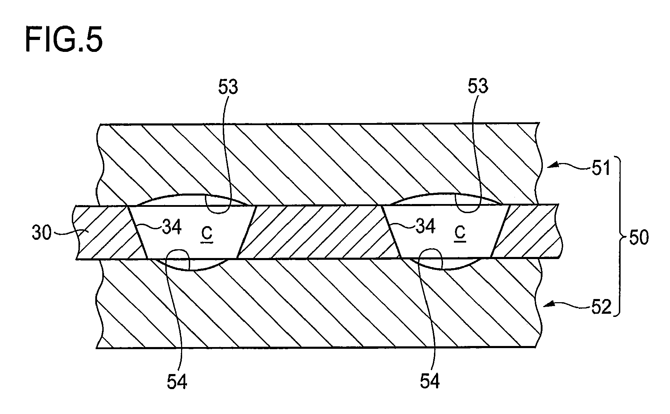

FIG.5 shows an example of a molding mold used in manufacturing the lens array in FIG.2.

A molding mold 50 shown in FIG.5 is used to mold the lens 32 by compressing the resin material, and has an upper mold 51 and a lower mold 52.

A molding surface 53 that is shaped into an inverted surface of one optical surface 33 of the lens 32 is provided in plural on the opposing surface of the upper mold 51, which opposes to the lower mold 52, in the same alignment as those of a plurality of lenses 32 of the lens array 5. Also, a molding surface 54 that is shaped into an inverted surface of the other optical surface 33 of the lens 32 is provided in plural on the opposing surface of the lower mold 52, which opposes to the upper mold 51, in the same alignment as those of a plurality of lenses 32 of the lens array 5.

The upper mold 51 and the lower mold 52 are positioned to put the substrate 30 between them. A cavity C used to form the lens 32 is constructed by the molding surface 53 of the upper mold 51 and the molding surface 54 of the lower mold 52, which is paired with the upper mold 51, and an inner surface of the through hole 34 of the substrate 30 that is positioned between the molding surfaces 53, 54.

As the resin material constituting the lens 32, an energy curable resin composite, for example, can be employed. As the energy curable resin composite, either of a resin composite that is cured by a heat and a resin composite that is cured by irradiating an active energy ray (e.g., ultraviolet irradiation, electron-beam irradiation) may be employed.

From a viewpoint of moldability such as a transfer aptitude of a mold shape, or the like, it is preferable that the resin composite constituting the lens 32 should have adequate flowablity before the resin composite is cured. Concretely the resin composite is a liquid at a room temperature, and the resin composite whose viscosity is about 1000 to 50000 mPa·s is preferable.

Also, it is preferable that the resin composite constituting the lens 32 should have a thermal resistance that does not cause the thermal deformation throughout the reflowing step after such resin composite is cured. From the above viewpoints, a glass transition temperature of the cured resin composite should be set preferably to 200 °C or more, more preferably to 250 °C or more, and particularly preferably to 300 °C or more. In order to give a high thermal resistance to the resin composite, it is necessary that the mobility should be bound at a molecular level. As the effective means, there are listed (1) the means for improving a crosslinking density per unit volume, (2) the means for utilizing the resin having a rigid ring structure (for example, the resin having an alicyclic structure such as cyclohexane, norbomane, tetracyclododecane, or the like, an aromatic ring structure such as benzene, naphthalene, or the like, a cardo structure such as 9,9'-biphenylfluorene, or the like, or a spiro structure such as spirobindane, or the like. Concretely, the resin set forth in JP-A-9-137043 , JP-A-10-67970 , JP-A-2003-55316 , JP-A- 2007-334018 , JP-A-2007-238883 , or the like, for example), (3) the means for dispersing uniformly the high Tg material such as inorganic fine particles, or the like (e.g., set forth in JP-A-5-209027 , JP-A-10-298265 , or the like), and others. These means may be employed in plural in combination. It is preferable that the combination should be adjusted within a cope not to spoil other characteristics such as flowability, a shrinkage rate, a refractive index, and the like.

Also, from the viewpoint of a form transfer precision, it is preferable that the resin composite whose volume shrinkage rate caused by a curing reaction is small should be employed as the resin composite constituting the lens 32. A curing shrinkage rate of the resin composite should be set preferably to 10 % or less, more preferably to 5 % or less, and particularly preferably to 3 % or less. As the resin composite whose curing shrinkage rate is low, for example, (1) the resin composite containing a curing agent (a prepolymer, or the like) of high molecular weight (e.g., set forth in JP-A-2001-19740 , JP-A-2004-302293 , JP-A-2007-211247 , or the like. A number-average molecular weight of the curing agent of high molecular weight should be set preferably to a range of 200 to 100,000, more preferably to a range of 500 to 50,000, and particularly preferably to a range of 1,000 to 20,000. Also, a ratio calculated by the number-average molecular weight of the curing agent/the number of curing reaction group should be set preferably to a range of 50 to 10,000, more preferably to a range of 100 to 5,000, and particularly preferably to a range of 200 to 3,000), (2) the resin composite containing an unreactive material (organic/inorganic fine particles, unreactive resin, or the like)(e.g., set forth in JP-A-6-298883 , JP-A-2001-247793 , JP-A-2006-225434 , or the like), (3) the resin composite containing a low-shrinkage crosslinking reaction group (for example, a ring-opening polymerization group (for example, epoxy group (e.g., set forth in JP-A-2004- 210932, or the like), an oxetanyl group (e.g., set forth in JP-A-8-134405 , or the like), an episulfide group (e.g., set forth in JP-A-2002-105110, or the like), a cyclic carbonate group (e.g., set forth in JP-A-7-62065 , or the like), or the like), an en/thiol cure group (e.g., set forth in JP-A-2003-20334 , or the like), a hydrosilylation cure group (e.g., set forth in JP-A-2005- 15666 , or the like), or the like), (4) the resin composite containing a rigid skelton resin (fluorene, adamantane, isophorone, or the like)(e.g., set forth in JP-A-9-137043 , or the like), (5) the resin composite in which an interpenetrating network (a so-called IPN structure) containing two types of monomers whose polymerization groups are different is formed (e.g., set forth in JP-A-2006-131868 , or the like), (6) the resin composite containing an expansive material (e.g., set forth in JP-A-2004-2719 , JP-A-2008-238417 , or the like), and the like can be listed, and these resin composites can be utilized preferably in the present invention. Also, from the viewpoint of physical property optimization, it is preferable that a plurality of curing shrinkage reducing means mentioned above should be employed in combination (for example, the prepolymer containing the ring-opening polymerization group and the resin composite containing the fine particles, and the like).

Also, a mixture of two types of the resins whose Abbe's numbers are different, e.g., whose Abbe's numbers are high and low, or more is desired as the resin composite constituting the lens 32. In the resin on the high Abbe's number side, the Abbe's number (vd) should be set preferably to 50 or more, more preferably to 55 or more, and particularly preferably to 60 or more. Also, the refractive index (nd) should be set preferably to 1.52 or more, more preferably to 1.55 or more, and particularly preferably to 1.57 or more. As such resin, the aliphatic resin is preferable, and the resin having an alicycle structure (for example, the resin having a ring structure such as cyclohexane, norbornane, adamantane, tricyclodecane, tetracyclododecane, or the like. Concretely, the resin set forth in JP-A-10-152551 , JP-A-2002-212500 , JP-A-2003-20334 , JP-A-2004-210932 , JP-A-2006-199790 , JP-A-2007-2144 , JP-A-2007-284650 , JP-A-2008-105999 , or the like, for example) is particularly preferable. In the resin on the low Abbe's number side, the Abbe's number (vd) should be set preferably to 30 or less, more preferably to 25 or less, and particularly preferably to 20 or less. Also, the refractive index (nd) should be set preferably to 1.60 or more, more preferably to 1.63 or more, and particularly preferably to 1.65 or more. As such resin, the resin having an aromatic structure is preferable. For example, the resin containing the structure such as 9,9'-diarylfluorene, naphthalene, benzothiazole, benzotriazole, or the like (concretely, the resin set forth in JP-A-60-38411 , JP-A-10-67977, JP-A-2002-47335 , JP-A-2003-238884 , JP-A-2004-83855 , JP-A-2005-325331 , JP-A-2007-238883 , WO-A-2006/095610, Japanese Patent No.2537540, or the like, for example) is preferable.

Also, it is preferable that, in order to enhance a refractive index or to adjust the Abbe's number, the inorganic fine particles should be dispersed into the matrix in the resin composite constituting the lens 32. As the inorganic fine particle, for example, an oxide fine particle, a sulfide fine particle, a selenide fine particle, and a telluride fine particle can be listed. More concretely, for example, the fine particle consisting of a zirconium oxide, a titanium oxide, a zinc oxide, a tin oxide, a niobium oxide, a cerium oxide, an aluminum oxide, a lanthanum oxide, a yttrium oxide, a zinc sulfide, or the like can be listed. In particular, it is preferable that the fine particle consisting of a lanthanum oxide, an aluminum oxide, a zirconium oxide, or the like should be dispersed into the resin of the high Abbe's number, while it is preferable that the fine particle consisting of a titanium oxide, a tin oxide, a zirconium oxide, or the like should be dispersed into the resin of the low Abbe's number. Either the inorganic fine particles may be employed solely, or two types or more of the inorganic fine particles may be employed in combination. Also, a composite material containing plural components may be employed. Also, for various purposes of reducing photocatalytic activity, reducing water absorption, etc., a different type metal may be doped into the inorganic fine particle, a surface layer of the inorganic fine particle may be coated with a different type metal oxide such as silica, alumina, or the like, or a surface of the inorganic fine particle may be modified by a silane coupling agent, a titanate coupling agent, organic acid (carboxylic acids, sulfonic acids, phosphoric acids, phosphonic acids, or the like), a dispersing agent having an organic acid group, or the like. Normally, a number-average particle size of the inorganic fine particle may be set to almost 1 nm to 1000 nm. In this case, the characteristic of the material is changed in some case if the particle size is too small whereas the influence of the Rayleigh scattering becomes conspicuous if the particle size is too large. Therefore, the particle size should be set preferably to 1 nm to 15 nm, more preferably to 2 nm to 10 nm, and particularly preferably to 3 nm to 7 nm. Also, it is desirable that a particle size distribution of the particle size should be set as narrow as possible. The various ways of defining such monodisperse particle may be considered. For example, the numerically specified range set forth in JP-A-2006-160992 belongs to the preferable range of the particle size distribution. Here, the above number-average primary particle size can be measured by the X-ray diffractometer (XRD), the transmission electron microscope (TEM), or the like, for example. The refractive index of the inorganic fine particles should be set preferably to 1.90 to 3.00 at 22 °C and a wavelength of 589 nm, more preferably to 1.90 to 2.70, and particularly preferably to 2.00 to 2.70. From viewpoints of transparency and higher refractive index, a content of inorganic fine particles in a resin should be set preferably to 5 mass % or more, more preferably to 10 to 70 mass %, and particularly preferably to 30 to 60 mass %.

In order to disperse the fine particles uniformly into the resin composite, it is desirable that the fine particles should be dispersed by using appropriately the dispersing agent containing the functional group that has a reactivity with resin monomers constituting the matrix (e.g., set forth in the embodiment of JP-A-2007-238884 , and the like), the block copolymer constructed by the hydrophobic segment and the hydrophilic segment (e.g., set forth in JP-A-2007-211164), the resin containing the functional group that can produce any chemical reaction with the inorganic fine particle at the polymer terminal or side chain (e.g., set forth in JP-A-2007-238929 , JP-A-2007-238930 , or the like), or the like, for example.

Also, in order to improve a bonding strength between the lens 32 and the substrate 30, the coupling agent may be mixed appropriately in the resin composite constituting the lens 32. For example, a silane coupling agent, a titanate coupling agent, an aluminate coupling agent, or the like may be mixed to improve the adhesive property to the inorganic material.

Also, the additive may be mixed appropriately in the resin composite constituting the lens 32. For example, the publicly known mold releasing agent such as a silicone-based chemical agent, a fluorine-based chemical agent, a long-chain alkyl group containing chemical agent, or the like, the antioxidizing agent such as hindered phenol, or the like, or the like may be mixed.

Also, as occasion demands, a curing catalyst or an initiator may be mixed in the resin composite constituting the lens 32. Concretely, the compound that accelerates a curing reaction (a radical polymerization or an ionic polymerization) by using an action of heat or activation energy rays, which is set forth in JP-A-2005-92099 (paragraph numbers [0063] to [0070]), or the like, for example, can be listed. An amount of addition of the curing accelerator, or the like is different based on a type of the catalyst or the initiator, a difference of the curing reaction part, or the like, and such amount of addition cannot be specified unconditionally. In general, preferably such amount of addition should be set to almost 0.1 to 15 mass % of the whole solid content of the curing reaction resin composite, and more preferably such amount of addition should be set to almost 0.5 to 5 mass %.

The resin composite constituting the lens 32 can be manufactured by mixing appropriately the above components. At this time, when other components can be dissolved in a liquid depolymeric monomer (a reactive diluent), or the like, it is not requested to add the solvent separately. However, when other components are not applicable to this case, respective constitutive components can be dissolved by using the solvent in manufacturing the curable resin composite. The solvent that can be used in the curing reaction resin composite is not particularly limited and can be appropriately chosen if such solvent does not cause precipitation of the composite and can be uniformly dissolved or dispersed. Concretely, for example, ketones (e.g., acetone, methyl ethyl ketone, methyl isobutyl ketone, etc.), esters (e.g., ethyl acetate, butyl acetate, etc.), ethers (e.g., tetrahydrofuran, 1,4-dioxane, etc.), alcohols (e.g., methanol, ethanol, isopropylene, butanol, ethylene glycol, etc.), aromatic hydrocarbons (e.g., toluene, xylene, etc.), water, and the like can be listed. When the curable composite contains the solvent, preferably the mold form transferring operation should be done after the solvent is dried.

When the energy curable resin composite is employed as the resin composite constituting the lens 32, the material of the upper mold 51 and the lower mold 52 may be chosen appropriately in response to the resin composite. That is, when the thermosetting resin is employed as the resin composite, the metal material such as nickel, or the like, which is excellent in thermal conductivity, or the material such as a glass, or the like, through which an infrared ray is transmitted, for example, is employed as the material of the mold. Also, when the UV curable resin is employed as the resin composite, the material such as a glass, or the like, through which an ultraviolet ray is transmitted, for example, is employed as the material of the mold. Also, when the electron-beam curable resin is employed as the resin composite, the material through which an electron beam is transmitted is employed as the material of the mold.

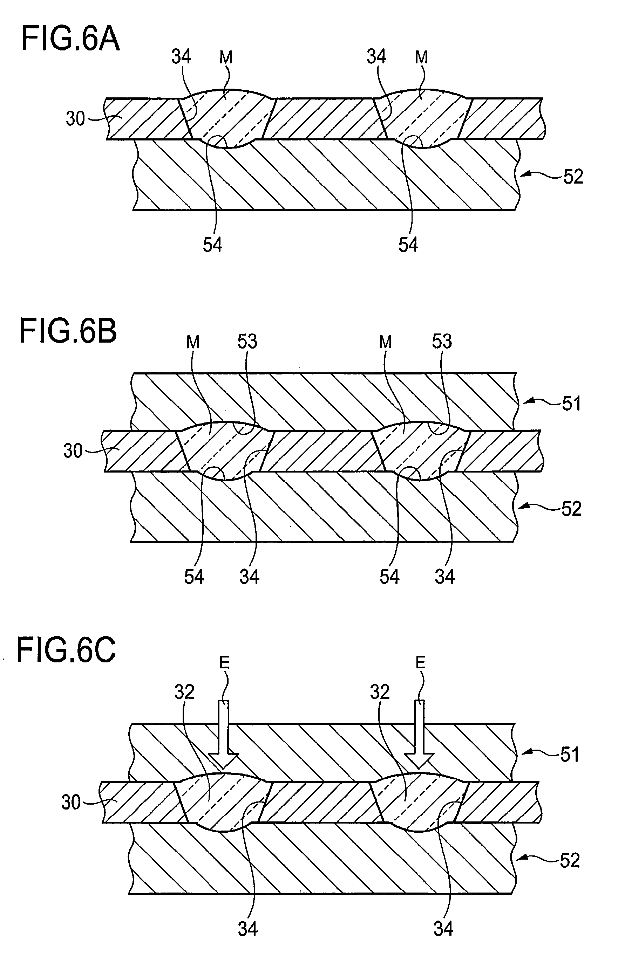

FIGS.6A to 6C show an example of a method of manufacturing the lens array in FIG.2.

As shown in FIG.6A, the lower mold 52 is set on the substrate 30. The through hole 34 in the substrate 30 is arranged on the molding surface 54 of the lower mold 52. Then, a resin material M is supplied into the concave portion, which is constructed by an inner surface of the through hole 34 in the substrate 30 and the molding surface 54 of the lower mold 52, by an amount that is needed to form the lens 32.

As shown in FIG.6B, the upper mold 51 is pushed down. According to the downward motion of the upper mold 51, the resin material M is pressed between the molding surface 53 of the upper mold 51 and the molding surface 54 of the lower mold 52. Thus, the resin material M is deformed to copy a form of inner surfaces of the molding surfaces 53, 54 and the through hole 34.

As shown in FIG.6C, the cavity is filled with the resin material M in a state that the molding mold 50 is closed after the upper mold 51 is pushed down completely. In this state, the resin material M is cured by applying a curing energy E appropriately. Thus, the resin material M is buried in the through hole 34, and the lens 32 is formed.

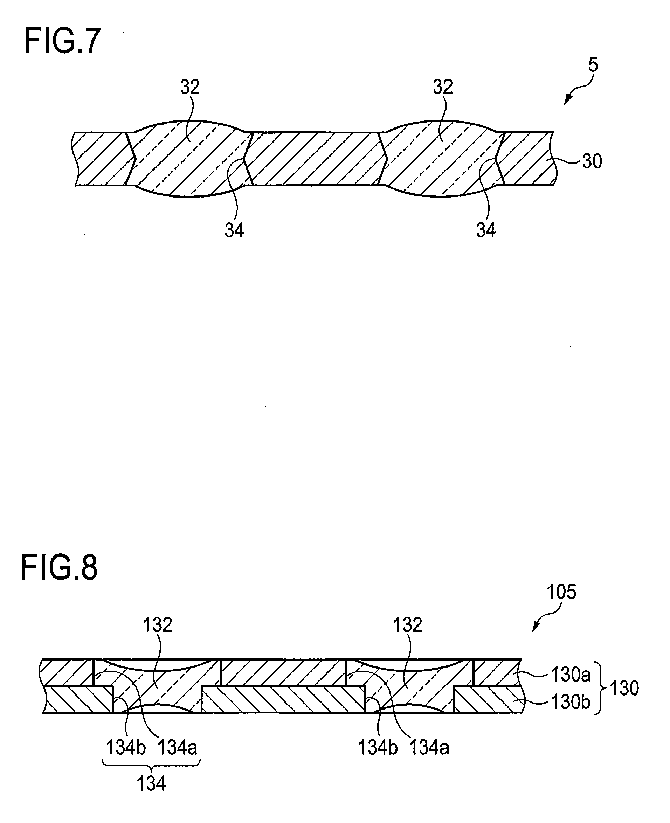

FIG.7 shows a variation of the lens array in FIG.2.

In the lens array 5, the through hole 34 in the substrate 30 is shaped such a manner that a sectional shape taken in parallel with the surface of the substrate 30 is a circular shape at any location of the through hole 34 in the depth direction, and also a diameter of the through hole 34 is minimized (a sectional area is minimized) at a location in the almost center of the hole in the depth direction, and this diameter is expanded (a sectional area is expanded) from the location at which the through hole 34 has the minimum diameter (a minimum sectional area) toward the openings on both sides. When a location at one opening of the through hole 34 is assumed as a first location, a location at the other opening of the through hole 34 is assumed as a second location, and a location in the substantially center of the through hole 34 in the depth direction is assumed as a third location, and also sectional areas of the through hole 34 taken at the first, second, and third locations are assumed as S1, S2, S3 respectively, S1>S3 and S2>S3 are satisfied.

The lens 32 provided to bury the through hole 34 holds an inner wall of the through hole 34, which is at the location where the through hole 34 has the minimum diameter, down in the depth direction of the through hole 34. In other words, the inner wall of the through hole 34 at the location where the through hole 34 has the minimum diameter cuts into the lens 32 in the radial direction so as to shape a wedge. Therefore, a mechanical engagement that prevents a displacement of the lens 32 toward the opening on the upper side in FIG.7 and a displacement of the lens 32 toward the opening on the lower side in FIG.7 respectively is produced between the inner wall of the through hole 34 and the lens 32. As a result, the adhesion of the lens 32 to the substrate 30 can be stabilized much more.

The through hole 34 whose diameter is expanded from the location, at which the through hole 34 has the minimum diameter in the almost center of the substrate 30 in the thickness direction, toward the opening on both sides can be formed by applying the blasting process shown in FIG.4D, for example, to the upper surface and the lower surface of the substrate material 40 respectively.

FIG.8 shows another example of the lens array.

A lens array 105 shown in FIG.8 includes a substrate 130, and a plurality of lenses 132.

The substrate 130 is formed like a wafer, and a plurality of through holes 134 are formed in the substrate 130.

The lens 132 is formed by compression-molding the resin material in the through hole 134, and is provided to bury the through hole 134. Also, the lens 132 is fitted in the area of the through hole 134.

The substrate 130 has two sheets of substrate members 130a, 130b. A plurality of through holes 134a are formed in the substrate member 130a in the same alignment as a plurality of lenses 132 in the lens array 105. Also, a plurality of through holes 134b are formed in the substrate member 130b in the same alignment as a plurality of lenses 132 in the lens array 105. The substrate 130 is constructed by laminating the substrate members 130a, 130b such that the through holes 134a in the substrate member 130a are aligned with the through holes 134b in the substrate member 130b respectively. Also, the through hole 134 in the substrate 130 is constructed such that the through holes 134a in the substrate member 130a is communicated with the through holes 134b in the substrate member 130b.

The through holes 134a in the substrate member 130a is formed as a circular-cylindrical hole whose sectional shape, which is taken in parallel with the surface of the substrate member 130a, has a substantially constant diameter at any location of the hole in the depth direction. Also, the through holes 134b in the substrate member 130b is formed as a circular-cylindrical hole. In this case, the diameter of the through holes 134a and the diameter of the through holes 134b are different mutually, and the diameter of the through holes 134b is set smaller than the diameter of the through holes 134a in the illustrated example. Therefore, in the through hole 134 constructed by communicating the through holes 134a, 134b, an opening area of a section that is taken in parallel with the surface of the substrate 130 is changed stepwise as a whole in the depth direction of the through hole 134.

Since an opening area of the section of the through hole 134 is changed in the depth direction, a mechanical engagement that prevents a displacement of the lens 132 in at least one direction along the depth direction of the through hole 134 is produced between the inner wall of the through hole 134 and the lens 132. In the illustrate example, since the opening of the through hole 134 on the lower side (the substrate member 130b side) in FIG.8 is formed to have the smaller diameter, a mechanical engagement that prevents a displacement of the lens 132 toward the opening on the lower side in FIG.8 is produced between the inner wall of the through hole 134 and the lens 132. As a result, the adhesion of the lens 32 to the substrate 30 can be stabilized.

Also, in forming through hole 134 whose sectional shape is changed stepwise, the formation of the through hole 134 is facilitated because the substrate 130 is constructed by laminating a plurality of substrate members 130a, 130b.

Like the substrate 130 in the lens array 5 in FIG.2, it is preferable that the substrate 130 should have the light shielding property. At that time, when the substrate 130 is formed to have the light shielding property, the light shielding property may be provided to at least one of the substrate members 130a, 130b constituting the substrate 130.

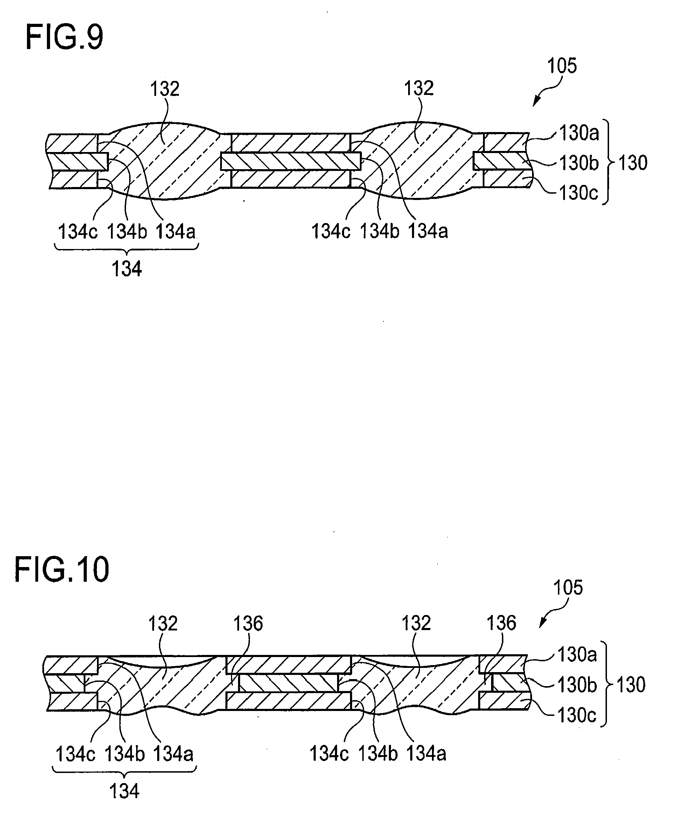

FIG.9 shows a variation of the lens array in FIG.8.

In the lens array 105 shown in FIG.9, the substrate 130 is constructed by laminating three sheets of substrate members 130a, 130b, 130c. A plurality of circular cylindrical holes 134a are formed in the substrate member 130a in the same alignment as a plurality of lenses 132 in the lens array 105. Similarly, a plurality of circular cylindrical holes 134b are formed in the substrate member 130b, and also a plurality of circular cylindrical holes 134c are formed in the substrate member 130c.

A diameter (a sectional area) of the hole 134a in the substrate member 130a located in the uppermost layer in FIG.9 and a diameter (a sectional area) of the hole 134c in the substrate member 130c located in the lowermost layer in FIG.9 are set equal to each other. A diameter (a sectional area) of the hole 134b in the substrate member 130b that is put between the substrate member 130a and the substrate member 130c is set smaller than respective diameters (sectional areas) of the holes 134a, 134c. When any location in the hole 134a in the depth direction of the through hole 134 is assumed as a first location, any location in the hole 134c is assumed as a second location, and any location in the hole 134b is assumed as a third location and also sectional areas of the through hole 134 taken at the first, second, and third locations are assumed as S1, S2, S3 respectively, S1>S3 and S2>S3 are satisfied.

The lens 132 provided by burying the through hole 134 holds the location (the projection portion) where the through hole 134 has the minimum diameter, i.e., the part of the substrate member 130b projected from the side surfaces of the holes 134a, 134c, down in the depth direction of the through hole 134. Therefore, a mechanical engagement that prevents a displacement of the lens 132 toward the opening on the upper side in FIG.9 and a displacement of the lens 132 toward the opening on the lower side in FIG.9 respectively is produced between the inner wall of the through hole 134 and the lens 132. As a result, the adhesion of the lens 32 to the substrate 30 can be stabilized much more.

FIG.10 shows another variation of the lens array in FIG.8.

In the lens array 105 shown in FIG.10, the substrate 130 is constructed by laminating the substrate member 130a in which a plurality of circular cylindrical holes 134a are formed, the substrate member 130b in which a plurality of circular cylindrical holes 134b are formed, and the substrate member 130c in which a plurality of circular cylindrical holes 134c are formed.

A diameter (a sectional area) of the hole 134a in the substrate member 130a located in the uppermost layer in FIG.10 and a diameter (a sectional area) of the hole 134c in the substrate member 130c located in the lowermost layer in FIG.10 are set equal to each other. A diameter (a sectional area) of the hole 134b in the substrate member 130b that is put between the substrate member 130a and the substrate member 130c is set larger than respective diameters (sectional areas) of the holes 134a, 134c. The hole 134b constitutes an annular concave portion in the whole through hole 134. When any location in the hole 134a in the depth direction of the through hole 134 is assumed as a first location, any location in the hole 134c is assumed as a second location, and any location in the hole 134b is assumed as a third location and also sectional areas of the through hole 134 taken at the first, second, and third locations are assumed as S1, S2, S3 respectively, S1<S3 and S2<S3 are satisfied.

The lens 132 provided by burying the through hole 134 has a flange 136 that is positioned at the location where the through hole 134 has the maximum diameter, i.e., is housed in the annular concave portion of the hole 134b of the through hole 134 in the substrate member 130b. The flange 136 is sandwiched by the substrate member 130a and the substrate member 130c in the depth direction of the through hole 134. Therefore, a mechanical engagement that prevents a displacement of the lens 132 toward the opening on the upper side in FIG.10 and a displacement of the lens 132 toward the opening on the lower side in FIG.10 respectively is produced between the inner wall of the through hole 134 and the lens 132. As a result, the adhesion of the lens 132 to the substrate 130 can be stabilized much more.

In the above lens array 105, the explanation is made on the assumption that all through holes 134a, 134b,.. formed in a plurality of substrate members 130a, 130b,.. constituting the substrate 130 are formed as the circular cylindrical hole and that the diameter of the through hole in a part of the substrate members is different from the diameters of the through holes in remaining substrate members. But the shape of the hole in the substrate member is not limited to the circular cylindrical shape. For example, the through hole in a part of the substrate members may be formed like a square shape, and the through holes in remaining substrate members may be formed like a circular cylindrical shape. According to this, the sectional shape and the opening area of the through hole 134, which are taken in parallel with the surface of the substrate 130, are changed as a whole in the depth direction of the through hole 134, and a mechanical engagement that prevents a displacement of the lens 132 in at least one direction along the depth direction of the through hole 134 is produced between the inner wall of the through hole 134 and the lens 132.

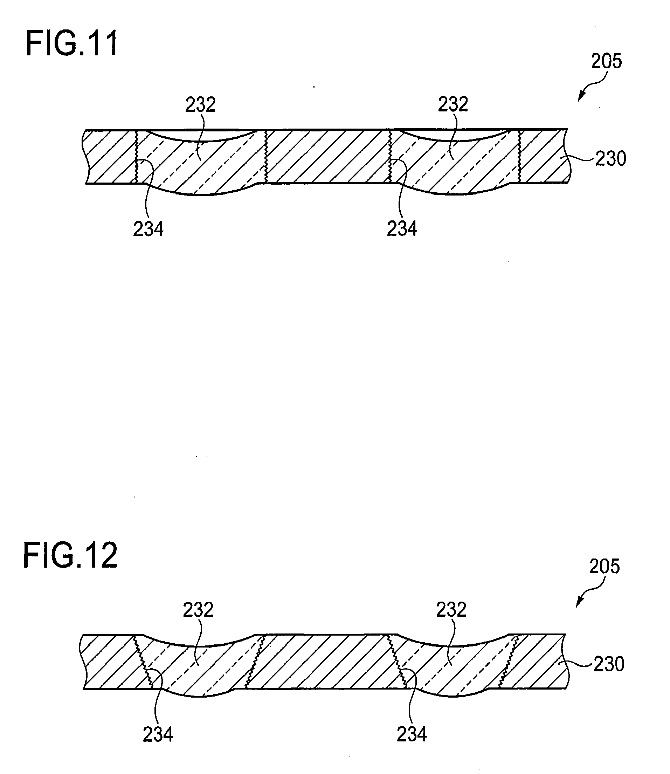

FIG.11 shows still another example of the lens array.

A lens array 205 shown in FIG.11 has a substrate 230 and a plurality of lenses 232.

The substrate 230 is formed like a wafer, and a plurality of circular cylindrical through holes 234 are formed to pass through the substrate 230 in the thickness direction. A fine unevenness is formed on the inner wall of the through hole 234, i.e., the inner wall of the through hole 234 is processed into a roughened surface.

The lens 232 is formed by compression-molding the resin material in the through hole 234, and is provided to bury the through hole 234. Also, the lens 232 is fitted in the area of the through hole 234.

The lens 232 provided to bury the through hole 234 contacts tightly to the inner wall of the through hole 234. The resin material of the lens 232 soaks into the fine unevenness on the inner wall of the through hole 234. A contact area between the inner wall of the through hole 234 and the lens 232 is expanded in contrast to the case where no unevenness is formed on the inner wall of the through hole 234, and a bonding strength between both members is enhanced. As a result, the adhesion of the lens 232 to the substrate 230 can be stabilized. Further, when the inner wall of the through hole 234 is processed into the roughened surface, the reflection of light at the boundary surface between the lens 232 and the substrate 230 can be prevented, and also occurrence of the ghost, flare, or the like of image can be prevented.

In case the inner wall of the through hole 234 is processed into the roughened surface, preferably a roughness of the surface should be set to 4 µm or more but 25 µm or less by means of the ten-point average roughness (Rz). The surface roughness of 1 µm or more may be employed for the purpose of reflection prevention only. In this case, when the surface roughness is set in the above range, a bonding strength between the inner wall of the through hole 234 and the lens 232 can also be enhanced. As the method of processing the inner wall of the through hole 234 into the roughened surface, for example, the blasting process, the etching process, the high-temperature oxidizing process, the polishing process, the laser machining process, etc. can be listed. In particular, the blasting process or the etching process can attain simultaneously the formation of the through holes 234 in the substrate 230 and the roughened surface of the inner walls of the through holes 234.

Here, the whole inner wall of the through hole 234 may be processed as the roughened surface. But a part of the area contacting the lens 232 may be processed as the roughened surface, so long as a bonding strength between the inner wall of the through holes 234 and the lens 232 can be maintained.

FIG.12 shows a variation of the lens array in FIG.11.

A basic structure of the lens array 205 shown in FIG.12 is common to that of the lens array 5 shown in FIG.3. The through hole 234 in the substrate 230 is shaped into a tapered hole in such a manner that a sectional shape taken in parallel with the surface of the substrate 230 constitutes a circular shape at any location of the through hole 234 in the depth direction whereas a diameter is reduced (a sectional area is reduced) gradually from the opening on the upper side in FIG. 12 toward the opening on the lower side. Also, the inner wall of the through holes 234 is processed into the roughened surface.

In this manner, when both approaches that the opening area in section of the through hole 234 is changed along the depth direction and that the inner wall of the through hole 234 is processed into the roughened surface are employed in combination, the adhesion of the lens 232 to the substrate 230 can be stabilized much more.

The lens array 5 (105, 205) manufactured as mentioned above is divided into a plurality of lens modules 3 (see FIG.1), each of which contains the lens 32 (132, 232), by cutting the substrate 30 (130, 230) by means of a cutter, or the like. The lens module 3, when being combined with the above sensor module 2, constitutes the image pickup unit 1.

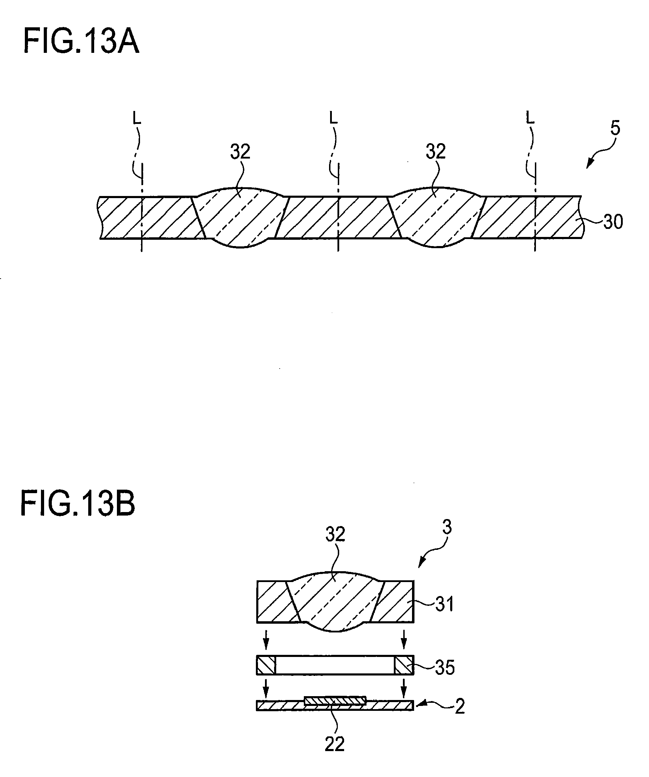

FIGS.13A and 13B show an example of a method of manufacturing the image pickup unit in FIG.1.

As shown in FIG.13A, the substrate 30 is cut along cutting lines L that are extended between the columns and the rows of a plurality of lenses 32 being aligned in a matrix fashion. Accordingly, the lens array 5 is divided into a plurality of lens modules 3 each of which contains the lens 32. Then, as shown in FIG.13B, the individual lens module 3 is stacked onto the sensor module 2 via the spacer 35. With the above, the image pickup unit 1 (see FIG.1) is obtained.

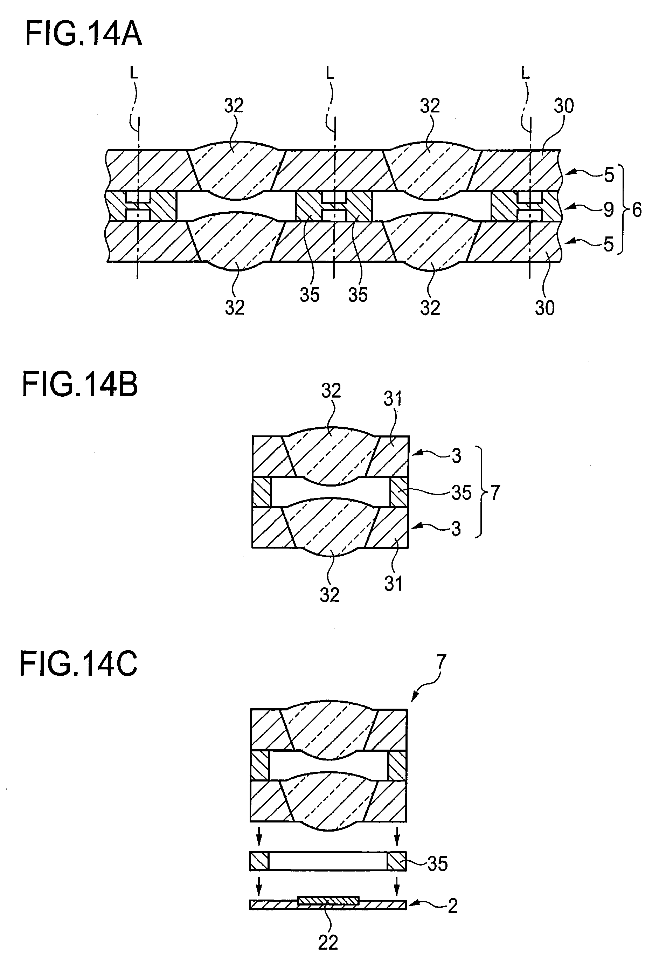

FIGS.14A to 14C show a variation of the method of manufacturing the image pickup unit in FIGS.13A and 13B. In the example shown in FIGS.14A to 14C, two lens modules 3 are stacked onto the sensor module 2.

As shown in FIG.14A, a lens array laminated structure 6 is constructed by stacking two sheets of lens arrays 5 via a spacer array 9 in which a plurality of spacers 35 are aligned in the same alignment as that of the lenses 32 in the lens array 5. Then, respective substrates 30 of two sheets of lens arrays 5 and the spacer array 9 contained in the lens array laminated structure 6 are cut together along the cutting lines L. Accordingly, as shown in FIG.14B, the lens array laminated structure 6 is divided into a plurality of lens module laminated structures 7 in each of which two lens modules 3 are stacked. Then, as shown in FIG.14C, the individual lens module laminated structure 7 is stacked on the sensor module 2 via the spacer 35. With the above, the image pickup unit 1 is obtained.

In this manner, when the lens module laminated structure 7 in which a plurality of lens modules 3 are stacked in advance is stacked on the sensor module 2, productivity of the image pickup unit 1 can be improved rather than the case where these lens modules 3 are stacked sequentially on the sensor module 2.

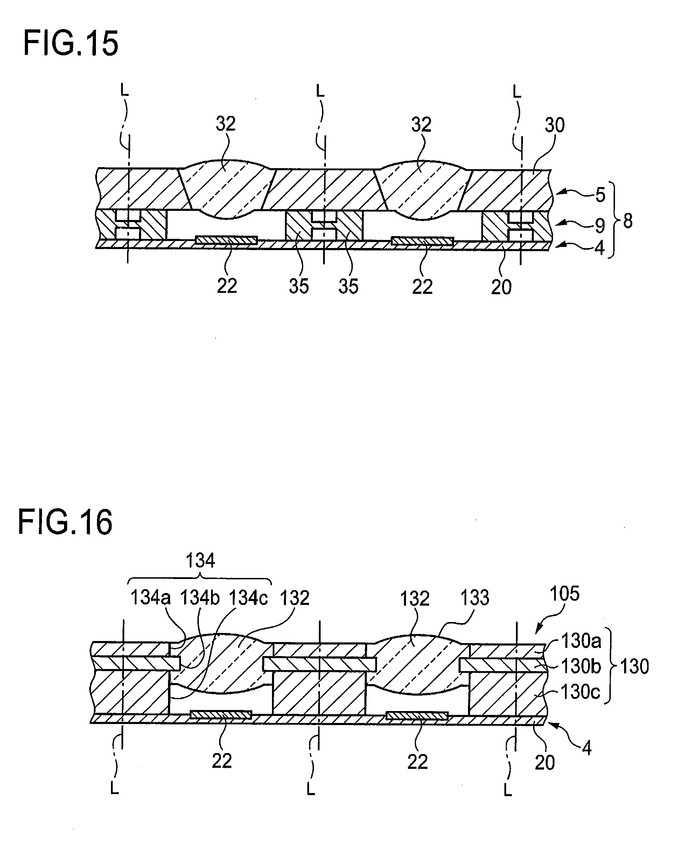

FIG.15 shows another example of a method of manufacturing an image pickup unit in FIG.1.

In the example shown in FIG 15, a device array laminated structure 8 as an assembly of a plurality of image pickup units 1 is constructed by stacking the lens array 5 on a sensor array 4, and then the device array laminated structure 8 is divided into a plurality of image pickup units 1.

The sensor array 4 includes a wafer 20 that is formed of semiconductor material such as silicon, or the like. A plurality of solid state imaging devices 22 are aligned on the wafer 20 in the same alignment as that of the lenses 32 in the lens array 5. Typically, a diameter of the wafer 20 is set to 6 inch, 8 inch, or 12 inch, and several thousand solid state imaging devices 22 are aligned there.

The device array laminated structure 8 is constructed by stacking the lens array 5 on the sensor array 4 via the spacer array 9. Then, the wafer 20 of the sensor array 4, the substrate 30 of the lens array 5, and the spacer array 9 contained in the device array laminated structure 8 are cut collectively along the cutting lines L. According to the above, the device array laminated structure 8 is divided into a plurality of image pickup units 1 each of which contains the lens 32 and the solid state imaging device 22.

In this manner, when one sheet of lens array 5 or more are stacked on the sensor array 4, and then the wafer 20 of the sensor array 4 and the substrate 30 of the lens array 5 are cut collectively and divided into a plurality of image pickup units 1, productivity of the image pickup unit 1 can be improved rather than the case where the lens module 3 or the lens module laminated structure 7 is fitted to the sensor module 2.

FIG.16 shows a variation of the method of manufacturing the image pickup unit in FIG.15,

In the example shown in FIG.16, the substrate of the lens array 105 is substituted for the spacer array. A basic structure of this lens array 105 is common to the lens array 105 shown in FIG.9, and the substrate 130 is constructed by laminating three sheets of substrate members 130a, 130b, 130c. Then, the substrate member 130c in the lowermost layer in FIG.16 is formed thicker than the substrate member 130c in the lens array 105 shown in FIG.9 by a thickness of the spacer 35 (see FIG.3). The lens 132 is fitted in the area of the through hole 134 not to extend the flange beyond the outside of an optical surface 133 on the surface of the substrate 130, and also the end surface of the lens 132 located on the lower side in the optical axis direction in FIG.16 is housed in the through hole 134. Therefore, the lens array 105 can contact the wafer 20 of the sensor array 4 (or the substrate 130 of other lens array 105) at the surface of the substrate 130 on the lower side in FIG.16, and can be stabilized on the sensor array 4.

In this manner, the substrate 130 of the lens array 105 is made to have the function as the spacer array. As a result, an alignment between the lens array 5 and the spacer array 9 and adhesion between both members required when the spacer array 9 (see FIG.15) is employed as the separate member can be omitted, and productivity of the image pickup unit 1 can be improved much more.

As discussed above, the following lens array, lens array laminated structure, device array laminated structure, lens module, lens module laminated structure and image pickup unit are disclosed.
(1) A lens array includes: a substrate in which a plurality of through holes are formed; and a plurality of lenses provided in the substrate by burying the plurality of through holes. A part of the through hole is different in at least one of sectional shape and opening area of the through hole, which are taken in parallel with a surface of the substrate, from another part of the through hole in a depth direction.
(2) According to the lens array of (1), the lens buried in the through hole does not extend onto the surface of the substrate.
(3) According to the lens array of (1) or (2), the opening area of the through hole is changed gradually from one surface of the substrate toward the other surface.
(4) According to the lens array of any one of (1) to (3), a convex portion or a concave portion is provided to an inner wall of the through hole.
(5) According to the lens array of any one of (1) to (4), the substrate is constructed by laminating a plurality of substrate members, in which a plurality of holes are provided in a same alignment respectively, to align respective hole positions mutually, and at least one of a hole shape and an opening area formed in a part of substrate members out of the plurality of substrate members are different from those formed in remaining substrate members.
(6) According to the lens array of any one of (1) to (5), the substrate has a light shielding property.
(7) According to the lens array of any one of (1) to (7), at least one end surface of the lens in an optical axis direction is located in the through hole.
(8) A lens array includes: a substrate in which a plurality of through holes are formed; and a plurality of lenses provided in the substrate by burying the plurality of through holes. At least a part of an inner wall of the through hole is processed into a roughened surface.
(9) According to the lens array of (8), a whole surface of the inner wall of the through hole is processed into the roughened surface.
(10) According to the lens array of (8) or (9), a surface roughness of the inner wall of the through hole whose surface is roughened is set to 4 µm or more but 25 µm or less in terms of a ten-point average roughness.
(11) According to the lens array of any one of (8) to (10), each of the lenses does not extend onto a surface of the substrate.
(12) According to the lens array of any one of (8) to (11), the substrate is constructed by laminating a plurality of substrate members, in which a plurality of holes are provided in a same alignment respectively, to align respective hole positions mutually, and inner walls of the holes formed in at least one substrate member out of the plurality of substrate members are processed into a roughened surface respectively.
(13) According to the lens array of any one of (8) to (12), the substrate has a light shielding property.
(14) A lens array laminated structure in which a plurality of lens arrays containing at least one lens array according to any one of (1) to (13) are stacked.
(15) A device array laminated structure, includes at least one lens array according to any one of (1) to (13); and a sensor array in which a plurality of solid state imaging devices are aligned on a wafer in a same alignment as the lenses of the lens array. The lens array is stacked on the sensor array.
(16) A lens module that is separated from the lens array according to one of (1) to (13) to contain one of the lenses.
(17) A lens module laminated structure that is separated from the lens array laminated structure according to (14) to contain the lenses that are aligned in a stacked layer direction.
(18) An image pickup unit that is separated from the device array laminated structure according to (15) to contain the image pickup units and the lenses that are aligned in a stacked layer direction.

## Claims

1. A lens array, comprising:
a substrate in which a plurality of through holes are formed; and
a plurality of lenses provided in the substrate by burying the plurality of through holes,
wherein a part of the through hole is different in at least one of sectional shape and opening area of the through hole, which are taken in parallel with a surface of the substrate, from another part of the through hole in a depth direction.

2. The lens array according to claim 1, wherein
the lens buried in the through hole does not extend onto the surface of the substrate.

3. The lens array according to claim 1 or 2, wherein
the opening area of the through hole is changed gradually from one surface of the substrate toward the other surface.

4. The lens array according to any one of claims 1 to 3, wherein
a convex portion or a concave portion is provided to an inner wall of the through hole.

5. The lens array according to any one of claims 1 to 4, wherein
the substrate is constructed by laminating a plurality of substrate members, in which a plurality of holes are provided in a same alignment respectively, to align respective hole positions mutually, and
at least one of a hole shape and an opening area formed in a part of substrate members out of the plurality of substrate members are different from those formed in remaining substrate members.

6. The lens array according to any one of claims 1 to 5, wherein
the substrate has a light shielding property.

7. The lens array according to any one of claims 1 to 6, wherein
at least one end surface of the lens in an optical axis direction is located in the through hole.

8. A lens array laminated structure in which a plurality of lens arrays containing at least one lens array according to any one of claims 1 to 7 are stacked.

9. A device array laminated structure, comprising:
at least one lens array according to any one of claims 1 to 7; and
a sensor array in which a plurality of solid state imaging devices are aligned on a wafer in a same alignment as the lenses of the lens array,
wherein the lens array is stacked on the sensor array.

10. A lens module that is separated from the lens array according to any one of claims 1 to 7 to contain one of the lenses.

11. A lens module laminated structure that is separated from the lens array laminated structure according to claim 8 to contain the lenses that are aligned in a stacked layer direction.

12. An image pickup unit that is separated from the device array laminated structure according to claim 9 to contain the image pickup units and the lenses that are aligned in a stacked layer direction.
